# EUROPÄISCHE PATENTSCHRIFT

(11) **EP 3 256 305 B1**
(45) Veröffentlichungstag und Bekanntmachung des Hinweises auf die Patenterteilung: **19.12.2018**
(21) Anmeldenummer: 16701356.4
(22) Anmeldetag: 22.01.2016
(51) Int. Cl.: B29C 45/84

(54) **SCHUTZEINRICHTUNG FÜR EINE SPRITZGIESSMASCHINE**
PROTECTION COVER FOR AN INJECTION MOULDING MACHINE
COIFFE DE PROTECTION POUR UNE MACHINE DE MOULAGE PAR INJECTION

(30) Priorität: 10.02.2015 DE 102015101852
(43) Veröffentlichungstag der Anmeldung: 20.12.2017
(73) Patentinhaber: Zhafir Plastics Machinery GmbH, 92263 Ebermannsdorf (DE)
(72) Erfinder: ISSEL, Dirk, 91207 Lauf (DE); HAUSDÖRFER, Iwo, 92245 Kümmersbruck (DE); FRANZ, Steffen, 92224 Amberg (DE); MEYER, Jörg, Kümmersbruck 92245 (DE); FENSTERER, Andreas, Amberg 92224 (DE)
(74) Vertreter: Lang, Christian
(86) Internationale Anmeldenummer: PCT/EP2016/051390
(87) Internationale Veröffentlichungsnummer: WO 2016/128204

(56) Entgegenhaltungen:
- DE-A1- 19 949 958
- JP-A- 2003 025 405

## Beschreibung

Die Erfindung betrifft eine Schutzeinrichtung für eine Spritzgießmaschine mit seitlichen Rahmenelementen bzw. seitlichen Abdeckungen sowie einer festen und einer beweglichen Werkzeugaufspannplatte, wobei die feste und die bewegliche Werkzeugaufspannplatte zwischen den seitlichen Rahmenelementen bzw. den seitlichen Abdeckungen angeordnet sind und die bewegliche Werkzeugaufspannplatte entlang einer parallel zu den seitlichen Rahmenelementen bzw. seitlichen Abdeckungen verlaufenden Schließachse in Relation zur festen Werkzeugaufspannplatte verfahrbar ist.

Schutzeinrichtungen gemäß dem Oberbegriff des Hauptanspruchs sind seit geraumer Zeit aus dem Stand der Technik bekannt. Die Anforderungen an die Betriebssicherheit von Spritzgießmaschinen werden länderübergreifend in verschiedenen Normen und Regulierungen festgehalten. Besonders hervorzuheben ist dabei die Europäische Norm EN 201 :2009.

Das Verfahren einer beweglichen Werkzeugaufspannplatte gegen eine feststehende Werkzeugaufspannplatte zum Schließen zweier Formhälften während eines Spritzgießprozesses stellt auf Grund der hohen Kräfte der sich bewegenden Teile einen Gefahrenbereich dar. Auf Grund dessen wird gefordert, dass dieser Bereich durch Schutzeinrichtungen von allen Seiten abgeschirmt wird, von denen ein Eingreifen durch eine sich im Umfeld der Spritzgießmaschine befindende Person möglich ist, d.h. sowohl von der Bediener- und Bedienergegenseite als auch von der Ober- und Unterseite der Spritzgießmaschine, so dass ein Eingreifen in den Gefahrenbereich während des Betriebs nicht möglich ist. Die Schutzeinrichtung muss dabei entweder derart ausgestaltet sein, dass sie sich bei laufendem Betrieb nicht entfernen lässt, oder derart ausgestaltet sein, dass ein Öffnen der Schutzeinrichtung während des Betriebs von einem Sicherheitsmechanismus erfasst und die gefahrbringende Bewegung stillgesetzt wird.

In der Praxis hat sich durchgesetzt, an der Bedienerseite und der Bedienergegenseite auf Höhe des Werkzeugbereichs bewegbare Schutztüren anzubringen, da so auf einfache Weise für die Teileentnahme und/oder Wartungsarbeiten Zugang zum Werkzeugbereich geschaffen werden kann. Die Schutzeinrichtung auf der Maschinenoberseite kann derart ausgestaltet sein, dass eine Abdeckung fest mit den seitlichen Rahmenelementen bzw. den seitlichen Abdeckungen verbunden ist, so dass sie während des Betriebs nicht entfernt werden kann. Dies bringt jedoch den Nachteil einer hohen Unflexibilität in Bezug auf Werkzeugwechsel und automatisierte Teileentnahme mit sich, da eine derartige Abdeckung komplett demontiert und später wieder montiert werden muss. Eine weitere Möglichkeit ist, die Abdeckung auf der Oberseite analog zur Bedienerseite und Bedienergegenseite als bewegbare Schutztür auszugestalten. Der Vorteil der hohen Flexibilität bringt jedoch hier den Nachteil mit sich, dass ein weiterer Sicherheitsmechanismus benötigt wird um festzustellen, ob die Schutztür auf der Oberseite geöffnet oder geschlossen ist.

Die Druckschrift JP 2003025405 A beschreibt eine Schutzeinrichtung für eine Spritzgießmaschine, die einteilig ausgebildet ist und den Werkzeugbereich portalartig überspannt. Es ist also nur noch eine einzige Schutzeinrichtung vorgesehen, die entlang der Schließachse verfahrbar ist und sowohl die Bedienerseite und Bedienergegenseite als auch die Oberseite der Maschine bedeckt. Auf diese Weise wird nur noch ein Sicherheitsmechanismus zur Feststellung des Zustands der Schutzeinrichtung benötigt. Nachteilig ist jedoch, dass die portalartige Abdeckung ein hohes Eigengewicht aufweist sowie aufwändig zu fertigen und nicht geeignet für einen Betrieb mit automatisierter Teileentnahme ist.

Aus der DE 09217420 U1 ist ebenfalls eine einteilige Schutzeinrichtung in Portalform bekannt, die derart am rückseitigen Ende eines Schließmechanismus gelagert ist, dass sie in Längsrichtung des Maschinenkörpers verschwenkt werden kann. Die Schutzeinrichtung steht in geöffnetem Zustand in rechtem Winkel zur Schließachse und lässt sich in Form einer Schutzhaube über den Schließmechanismus schwenken, so dass während des Betriebs der Maschine der Werkzeugbereich und die beweglichen Teile vollständig abgedeckt sind. Eine solche Ausgestaltung weist jedoch ebenfalls die bereits im vorangehenden Absatz aufgezeigten Nachteile auf.

Auch aus der Druckschrift DE 199 49 958 A1 ist eine herkömmliche Schutzeinrichtung für ein Spritzgießverfahren bekannt, die durch eine Schutzabdeckung zum Abdecken der Spritzdüse in einer Schutzposition während des Einspritzens realisiert ist, wobei ein Oberteil der Schutzabdeckung um eine im Wesentlichen parallel zur Spritzachse angeordnete Schwenkachse schwenkbar gelagert ist. Demnach lässt sich das Oberteil im Wesentlichen in Form einer Schutzhaube so verschwenken, dass während des Betriebs der Maschine der Bearbeitungsbereich vollständig abgedeckt wird.

Der Erfindung liegt daher die Aufgabe zu Grunde, eine Schutzeinrichtung für eine Spritzgießmaschine bereitzustellen, die allen Sicherheitsanforderungen genügt, flexibel in ihrer Anwendung sowie einfach und kostengünstig zu fertigen ist.

Zur Lösung dieser Aufgabe ist erfindungsgemäß vorgesehen, eine Schutzeinrichtung der Eingangs genannten Art derart weiterzubilden, dass an der Oberseite der Spritzgießmaschine sowohl auf einer Bedienerseite als auch auf einer der Bedienerseite gegenüberliegenden Bedienergegenseite eine Anzahl erster Abdeckelemente angeordnet ist, welche parallel zur Schließachse verlaufen, wobei die Anordnung der ersten Abdeckelemente derart ausgestaltet ist, dass eine radiale Bewegung der ersten Abdeckelemente möglich ist, und dass an der Oberseite der Spritzgießmaschine eine Anzahl zweiter Abdeckelemente angeordnet ist, welche orthogonal zur Schließachse verlaufen, wobei die Anordnung der zweiten Abdeckelemente derart ausgestaltet ist, dass eine radiale Bewegung der zweiten Abdeckelemente möglich ist.

Der Erfindung liegt die Erkenntnis zu Grunde, an der Oberseite der Spritzgießmaschine sowohl auf der Bedienerseite als auch auf der Bedienergegenseite eine Anzahl erster Abdeckelemente anzubringen, die parallel zur Schließachse und somit auch parallel zu den seitlichen Rahmenelementen bzw. seitlichen Abdeckungen verlaufen, und an der Oberseite der Spritzgießmaschine eine Anzahl zweiter Abdeckelemente anzubringen, die orthogonal zur Spritzachse und somit zwischen den seitlichen Rahmenelementen bzw. seitlichen Abdeckungen verlaufen. Dabei kann an jeder Seite jeweils ein Abdeckelement vorgesehen sein, so dass eine Gesamtzahl von zwei ersten und zwei zweiten Abdeckelementen ergibt. Es ist jedoch auch ohne weiteres möglich, an jeder Seite zwei oder mehrere Abdeckelemente anzubringen, so dass sich die Gesamtzahl der ersten und zweiten Abdeckelemente dementsprechend erhöht.

Die ersten und zweiten Abdeckelemente sind erfindungsgemäß derart angeordnet, dass sie radial bewegt werden können, wobei die Rotationsachse der ersten Abdeckelemente parallel zur Schließachse und die Rotationsachse der zweiten Abdeckelemente orthogonal zur Schließachse liegt. Auf diese Weise ist es möglich, die ersten und zweiten Abdeckelemente derart zu positionieren, dass sie im Verbund den zwischen der festen und der beweglichen Werkzeugaufspannplatte liegenden Werkzeugbereich von der Maschinenoberseite her abdecken, so dass ein Eingreifen von außen in den Gefahrenbereich durch eine sich im Umfeld der Maschine befindende Person nicht möglich ist. In diesem geschlossenen Zustand der Schutzeinrichtung überlappen sich die ersten und zweiten Abdeckelemente, wobei sowohl eine Ausführungsform der Erfindung, in der die ersten Abdeckelemente in geschlossenem Zustand unter den zweiten Abdeckelementen liegen, als auch eine Ausführungsform der Erfindung, in der die ersten Abdeckelemente in geschlossenem Zustand über den zweiten Abdeckelementen liegen, möglich ist.

Durch eine radiale Bewegung der ersten und zweiten Abdeckelemente nach oben, z.B. in Form eines einfachen Aufklappens, kann Zugang zum Werkzeugbereich geschaffen werden, so dass ein Wechsel von sich an der festen und der beweglichen Werkzeugaufspannplatte befindlichen Werkzeughälften sowie eine Eingriffsmöglichkeit für Peripheriegeräte zur automatisierten Teileentnahme auf einfache Weise möglich ist. Die ersten und die zweiten Abdeckelemente ragen dabei nach oben, d.h. die ersten Abdeckelemente bilden auf der Bedienerseite und der Bedienergegenseite eine vertikale Verlängerung der seitlichen Rahmenelemente bzw. seitlichen Abdeckungen und die zweiten Abdeckelemente verbinden die durch die ersten Abdeckelemente gebildete vertikale Verlängerung zu einem den Werkzeugbereich vollständig umlaufenden Eingriffschutz. Ein Eingreifen durch eine sich im Umfeld der Spritzgießmaschine befindende Person ist jedoch auch in diesem geöffnetem Zustand der Schutzeinrichtung nicht möglich, da bei einem Eingriffsversuch in Form eines Übergreifens der seitlichen Rahmenelemente bzw. der seitlichen Abdeckungen das jeweilige erste oder zweite Abdeckelement nach unten klappt und so den Werkzeugbereich an der entsprechenden Stelle abdeckt.

Die erfindungsgemäße Schutzeinrichtung bringt also den Vorteil mit sich, dass sowohl in geschlossenem als auch in geöffnetem Zustand ein Eingreifen von außen durch eine sich im Umfeld der Spritzgießmaschine befindende Person nicht möglich ist. Daher kann auf einen Sicherheitsmechanismus, der den Zustand der Schutzeinrichtung erfasst und bei einer geöffneten Schutzeinrichtung die gefahrbringende Bewegung stillsetzt, verzichtet werden. Dies führt zu einer deutlichen Kostenreduktion gegenüber den aus dem Stand der Technik bekannten Schutzeinrichtungen. Des Weiteren ist die erfindungsgemäße Schutzeinrichtung einfach und flexibel in ihren Anwendungsmöglichkeiten, da lediglich durch ein Aufklappen bzw. Zuklappen der ersten und zweiten Abdeckelemente die Schutzeinrichtung geöffnet bzw. geschlossen werden kann. Der geöffnete Zustand der erfindungsgemäßen Schutzeinrichtung bietet den besonderen Vorteil, dass gleichzeitig ein Zugang zum Werkzeugbereich geschaffen, ein Eingreifen in den Gefahrenbereich jedoch ausgeschlossen wird. Der bei geöffneter Schutzeinrichtung entstehende Zugangsraum zum Werkzeugbereich ist ausreichend groß, um einen Wechsel der Werkzeughälften sowie einen Maschinenbetrieb mit Peripheriegeräten zur automatisierten Teileentnahme zu ermöglichen.

Besonders bevorzugt kann die Anordnung der ersten und zweiten Abdeckelemente derart erfolgen, dass in geschlossenem Zustand der Schutzeinrichtung der Abstand zwischen den Drehachsen der zweiten Abdeckelemente und den angrenzenden horizontalen Enden der ersten Abdeckelemente in einem Bereich zwischen 1mm und 15mm liegt. In diesem Bereich ist bei geöffneter Schutzeinrichtung das Spaltmaß zwischen zwei benachbarten Abdeckelementen derart klein, dass ein Eingreifen von außen durch eine sich im Umfeld der Maschine befindende Person nicht möglich ist. Vergrößert sich der Abstand über die als bevorzugt definierte Obergrenze, vergrößert sich automatisch auch das Spaltmaß zwischen zwei benachbarten Abdeckelementen, so dass ein Eingreifen unter Umständen möglich wird und ein ausreichender Schutz nicht mehr gewährleistet werden kann.

In einer bevorzugten Ausführungsform der vorliegenden Erfindung sind die ersten Abdeckelemente und die zweiten Abdeckelemente über Verbindungselemente an den seitlichen Rahmenelementen bzw. den seitlichen Abdeckungen befestigt. Es besteht jedoch auch die Möglichkeit, zwischen den seitlichen Rahmenelementen bzw. seitlichen Abdeckungen Traversen, Streben oder Verkleidungen vorzusehen, die der Befestigung der ersten und/oder der zweiten Abdeckelemente über Verbindungselemente dienen. Auf Grund der Flexibilität der vorliegenden Erfindung ist es jedoch nicht notwendig, sich auf eine der beiden Varianten zu beschränken. Es ist vielmehr möglich, die beiden Befestigungsvarianten nach Belieben zu kombinieren. So können z.B. die ersten Abdeckelemente über Verbindungselemente an den seitlichen Rahmenelementen bzw. seitlichen Abdeckungen befestigt sein, während die zweiten Abdeckelemente über Verbindungselemente jeweils an zwischen den seitlichen Rahmenelementen bzw. seitlichen Abdeckungen verlaufenden Traversen oder Schutzverkleidungen befestigt sind.

Als Verbindungselemente zwischen den ersten bzw. zweiten Abdeckelementen und den seitlichen Rahmenelementen bzw. seitlichen Abdeckungen, Traversen, Streben oder Verkleidungen sind vorzugsweise Scharniere vorgesehen, da diese die erfindungsgemäß benötigte Radialbewegung gewährleisten und als Normteile einfach und kostengünstig zu beziehen sind. Besonders bevorzugt sind die Scharniere derart ausgebildet, dass sie für den Fall, in dem sie an der dem Werkzeugbereich zugewandten Seite eines seitlichen Rahmenelements, einer Traverse oder einer Verkleidung angeschlagen sind, einen Öffnungswinkel im Bereich zwischen 91° und 100° ermöglichen. Dieser Bereich ist von Vorteil, da die ersten und zweiten Abdeckelemente nach Aufklappen durch die Gravitationskraft im geöffneten Zustand gehalten werden und so kein separater Haltemechanismus erforderlich ist. Zudem ist in diesem Öffnungswinkelbereich bei geöffneter Schutzeinrichtung das Spaltmaß zwischen zwei benachbarten Abdeckelementen derart klein, dass ein Eingreifen von außen durch eine sich im Umfeld der Maschine befindende Person nicht möglich ist. Vergrößert sich der Öffnungswinkel über die als bevorzugt definierte Obergrenze, vergrößert sich automatisch auch das Spaltmaß zwischen zwei benachbarten Abdeckelementen, so dass ein Eingreifen unter Umständen möglich wird und ein ausreichender Schutz nicht mehr gewährleistet werden kann. Die Erfindung beschränkt sich jedoch nicht auf einen Anschlag der Scharniere an der dem Werkzeugbereich zugewandten Seite eines seitlichen Rahmenelements, einer Traverse oder einer Verkleidung; ist ein anderer Anschlag vorgesehen, muss jedoch der bevorzugte Öffnungswinkelbereich daran angepasst werden. Die Auswahl der Verbindungselemente beschränkt sich nicht auf Scharniere; es können im Rahmen der vorliegenden Erfindung vielmehr alle Verbindungselemente verwendet werden, mit denen eine Radialbewegung der ersten und zweiten Abdeckelemente gewährleistet werden kann.

An den seitlichen Rahmenelementen bzw. seitlichen Abdeckungen, Traversen, Streben oder Verkleidungen können Haltevorrichtungen vorgesehen sein, die eine Auflagefläche für die ersten und/oder zweiten Abdeckelemente bilden und somit deren radialen Bewegungsweg in beide Drehrichtungen begrenzen. Bevorzugt ist eine erste Anzahl von Haltevorrichtungen derart angeordnet, dass die ersten und zweiten Abdeckelemente in geschlossenem Zustand der Schutzeinrichtung so auf der ersten Anzahl von Haltevorrichtungen aufliegen, dass sie sich in rechtem Winkel zu den seitlichen Rahmenelementen bzw. seitlichen Abdeckungen befinden. Eine zweite Anzahl von Haltevorrichtungen ist besonders bevorzugt derart angeordnet, dass die ersten und zweiten Abdeckelemente in geöffnetem Zustand der Schutzeinrichtung so auf der zweiten Anzahl von Haltevorrichtungen aufliegen, dass der Öffnungswinkel der Abdeckelemente im bevorzugten Bereich zwischen 91° und 100° liegt.

Die ersten und zweiten Abdeckelemente können vorzugsweise aus Stahlblech gefertigt sein, wobei sich eine Materialstärke im Bereich zwischen 1,5 mm und 4 mm als besonders geeignet herausgestellt hat. Die vorliegende Erfindung beschränkt sich beim für die ersten und zweiten Abdeckelemente verwendeten Material jedoch nicht auf Stahlblech. Es ist vielmehr möglich, jeden als dafür geeignet erscheinenden Werkstoff zu verwenden. In einer besonders bevorzugten Ausführungsform der Erfindung sind an den ersten und zweiten Abdeckelementen Griffvorrichtungen angeordnet, die ein einfaches Öffnen und Schließen der Schutzeinrichtung durch einen Bediener ermöglichen. Die ersten und zweiten Abdeckelemente sind in einer besonders bevorzugten Ausführungsform der Erfindung derart dimensioniert, dass der in geöffnetem Zustand der Schutzeinrichtung von ihnen gebildete Eingriffschutz eine solch große vertikale Verlängerung der Maschinenhöhe aufweist, dass sich das obere Ende der ersten und zweiten Abdeckelemente von einer sich im Umfeld der Spritzgießmaschine befindenden Person auch mit ausgestrecktem Arm nicht erreichen lässt.

In einer weiteren vorteilhaften Ausführungsform der Erfindung weisen die ersten und zweiten Abdeckelemente Arretiervorrichtungen auf. Beim Betrieb einer Spritzgießmaschine wirken naturgemäß auf Grund der Schließkräfte sowie der sich bewegenden Teile dynamische Belastungen auf die Maschinenteile im Allgemeinen und auch auf Schutzeinrichtungen im Speziellen ein. Dies kann dazu führen, dass die ersten und zweiten Abdeckelemente während des Betriebs in Schwingung versetzt werden, was in einer unerwünschten Erhöhung von Geräuschpegel und Materialabnutzung und schlimmstenfalls in einem unerwünschten Schließen der ersten und/oder zweiten Abdeckelemente resultiert. Aus diesem Grund können z.B. an den ersten Abdeckelementen Ösen und an den zweiten Abdeckelementen Bohrungen vorgesehen sein. Auf diese Weise können im geöffneten Zustand der Schutzeinrichtung jeweils zwei benachbarte erste und zweite Abdeckelemente, z.B. mit Hilfe einer Schraube-Mutter Verbindung, aneinander arretiert werden, wodurch die Schutzeinrichtung ein in sich starres System bildet und die genannten Nachteile vermieden werden. Dies ist besonders bei einem Maschinenbetrieb mit automatisierter Teileentnahme von Vorteil, bei dem sich die Schutzeinrichtung stets in geöffnetem Zustand befindet und ein Peripheriegerät von oben in den Werkzeugbereich greift, da ein unerwünschtes Zuklappen zumindest eines der ersten und/oder zweiten Abdeckelemente zu Schäden am Peripheriegerät führen kann. Die Erfindung ist jedoch nicht auf eine derartige Arretierung beschränkt. Eine Arretierung der ersten und zweiten Abdeckelemente kann vielmehr auf jede geeignete Art erfolgen.

Die Erfindung betrifft zudem eine Spritzgießmaschine mit einer derartigen Schutzeinrichtung.

Weitere Vorteile und Einzelheiten der vorliegenden Erfindung werden anhand von Ausführungsbeispielen unter Bezugnahme auf die Zeichnungen beschrieben. Die Zeichnungen sind schematische Darstellungen und zeigen:
- Fig. 1:: eine perspektivische Darstellung einer erfindungsgemäßen Schutzeinrichtung in geschlossenem Zustand;
- Fig. 2:: eine perspektivische Darstellung der Schutzeinrichtung aus Fig. 1 in geöffnetem Zustand;
- Fig. 3:: eine Nahansicht der Schutzeinrichtung aus Fig. 1 in geschlossenem Zustand;
- Fig. 4:: eine Nahansicht der Schutzeinrichtung aus Fig. 1 in geöffnetem Zustand;
- Fig. 5:: eine Nahansicht eines Übergangs von einem ersten Abdeckelement zu einem zweiten Abdeckelement;
- Fig. 6:: eine weitere Nahansicht des Übergangs aus Fig. 5.

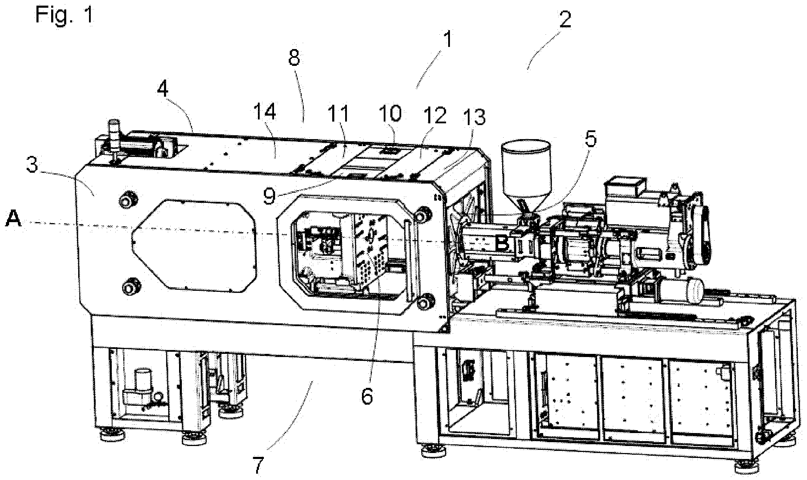

Die Fig. 1 zeigt eine Schutzeinrichtung 1 für eine Spritzgießmaschine 2 mit seitlichen Rahmenelementen 3, 4 in geschlossenem Zustand. Die Spritzgießmaschine 2 umfasst eine feststehende Werkzeugaufspannplatte 5 und eine bewegliche Werkzeugaufspannplatte 6, wobei die bewegliche Werkzeugaufspannplatte 6 entlang einer parallel zu den seitlichen Rahmenelementen 3, 4 liegenden Schließachse A-B in Relation zur festen Werkzeugaufspannplatte 5 verfahrbar ist. Zwischen den seitlichen Rahmenelementen 3, 4 sind feststehende Schutzverkleidungen 13, 14 angebracht, die bewegliche Teile eines nicht näher dargestellten Antriebsmechanismus abdecken.

An den seitlichen Rahmenelementen 3, 4 sind an einer Bedienerseite 7 und einer Bedienergegenseite 8 erste Abdeckelemente 9, 10 derart befestigt, dass sie radial bewegbar sind. Die ersten Abdeckelemente 9, 10 sind so positioniert, dass sie im rechten Winkel zur Innenseite der seitlichen Rahmenelemente 3, 4 liegen, d.h. sie liegen plan auf der Oberseite der Spritzgießmaschine 2. Zwischen den seitlichen Rahmenelementen 3, 4 sind zweite Abdeckelemente 11, 12 angeordnet. Die zweiten Abdeckelemente 11, 12 sind derart an den Schutzverkleidungen 13, 14 befestigt, dass sie radial bewegbar sind und liegen ebenfalls rechtwinklig zur Innenseite der seitlichen Rahmenelemente 3, 4 und folglich plan auf der Oberfläche der Spritzgießmaschine 2 auf, so dass sie die ersten Abdeckelemente 9, 10 überlappen. Die ersten Abdeckelemente 9, 10 und die zweiten Abdeckelemente 11, 12 bilden im Verbund auf der Oberseite der Spritzgießmaschine 2 eine Abdeckung des sich zwischen der festen Werkzeugaufspannplatte 5 und der beweglichen Werkzeugaufspannplatte 6 befindlichen Werkzeugbereichs, so dass ein Eingreifen in den Werkzeugbereich von außen in Form eines Übergreifen der seitlichen Rahmenelementen 3, 4 durch eine sich im Umfeld der Spritzgießmaschine 2 befindende Person nicht möglich ist.

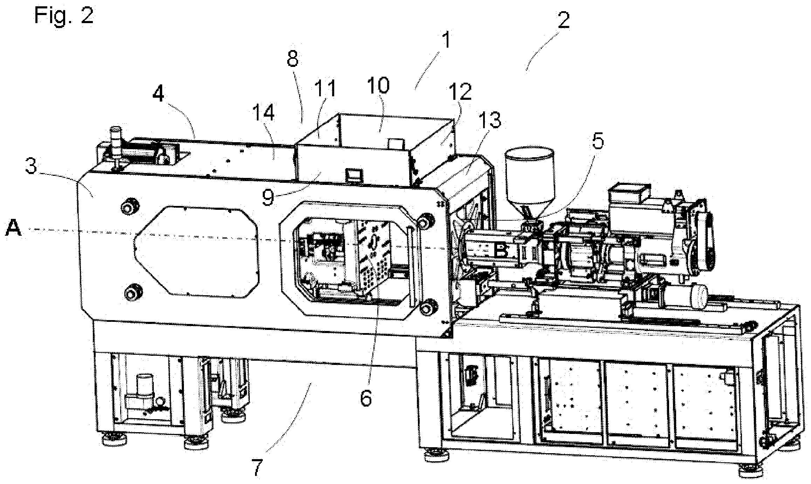

Fig. 2 ist eine perspektivische Ansicht der Schutzeinrichtung 1 aus Fig. 1 in geöffnetem Zustand. Es ist zu erkennen, dass mittels einer radialen Bewegung der ersten Abdeckelemente 9, 10 sowie der zweiten Abdeckelemente 11, 12 nach oben, z.B. in Form eines Aufklappens, Zugang zum zwischen der feststehenden Werkzeugaufspannplatte 5 und der beweglichen Werkzeugaufspannplatte 6 liegenden Werkzeugbereich geschaffen wurde. Die ersten Abdeckelemente 9, 10 bilden auf der Bedienerseite 7 und der Bedienergegenseite 8 eine vertikale Verlängerung der seitlichen Rahmenelemente 3, 4. Die entstandenen vertikalen Verlängerungen des seitlichen Rahmenelements 3 durch das erste Abdeckelement 9 sowie des seitlichen Rahmenelements 4 durch das erste Abdeckelement 10 werden durch die zweiten Abdeckelemente 11, 12 miteinander verbunden. Auf diese Weise entsteht ein den Werkzeugbereich vollständig umlaufender Eingriffschutz, der von der Oberseite Zugang zum Werkzeugbereich gewährleistet, jedoch gleichzeitig ein Eingreifen einer sich im Umfeld der Spritzgießmaschine befindenden Person verhindert, da bei einem Eingriffsversuch das jeweilige erste oder zweite Abdeckelement nach unten klappt und so den Werkzeugbereich an der entsprechenden Stelle abdeckt.

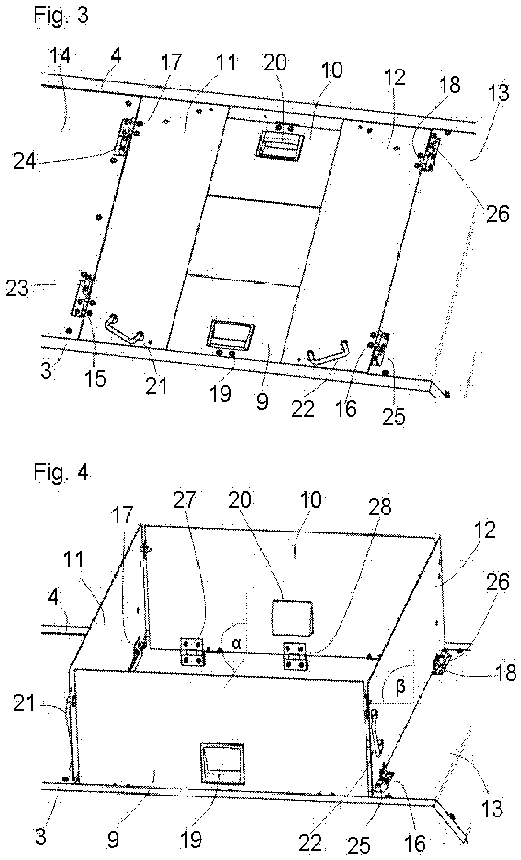

Fig. 3 zeigt eine Nahansicht der Schutzeinrichtung 1 aus Fig. 1 in geschlossenem Zustand. Es ist zu erkennen, dass die zweiten Abdeckelemente 11, 12 über Scharniere 15, 16, 17, 18 an den Schutzverkleidungen 13, 14 befestigt sind. Ebenfalls über Scharnierverbindungen sind die ersten Abdeckelemente 9, 10 an den seitlichen Rahmenelementen 3, 4 befestigt; diese Scharnierverbindungen sind jedoch auf Grund der in der Fig. 3 gewählten Perspektive nicht zu sehen. Die Erfindung beschränkt sich jedoch nicht auf die im Rahmen dieses Ausführungsbeispiels beschriebene Befestigung der zweiten Abdeckelemente 11, 12 an den Schutzverkleidungen 13, 14. Die zweiten Abdeckelemente 11, 12 können ohne weiteres auch an den seitlichen Rahmenelementen 3, 4 oder anderen Maschinenteilen befestigt sein. An den ersten und zweiten Abdeckelementen 9, 10, 11, 12 sind Griffvorrichtungen 19, 20, 21, 22 angebracht, die ein einfaches Bewegen der ersten und zweiten Abdeckelementen 9, 10, 11, 12 zum Öffnen und Schließen der Schutzeinrichtung ermöglichen. Die Schutzverkleidungen 13, 14 weisen Haltevorrichtungen 23, 24, 25, 26 auf, die zur Begrenzung des radialen Bewegungswegs der zweiten Abdeckelemente 11, 12 und somit der Einhaltung des bevorzugten Öffnungswinkels im geöffneten Zustand der Schutzeinrichtung 1 dienen.

Fig. 4 ist eine Nahansicht der Schutzeinrichtung 1 aus Fig. 1 in geöffnetem Zustand. Die ersten und zweiten Abdeckelemente 9, 10, 11, 12 sind durch eine radiale Drehbewegung nach oben geklappt. Dabei bilden die ersten Abdeckelemente 9, 10 eine vertikale Verlängerung der seitlichen Rahmenelementen 3, 4 und die zweiten Abdeckelemente 11, 12 verbinden die gebildete vertikale Verlängerung zu einem den zwischen der feststehenden Werkzeugaufspannplatte 5 und der beweglichen Werkzeugaufspannplatte 6 liegenden Werkzeugbereich umlaufenden Eingriffschutz. Es ist zu erkennen, dass das zweite Abdeckelement 12 auf den Haltevorrichtung 25, 26 aufliegt, so dass der maximale Öffnungswinkel ß des zweiten Abdeckelements 12 begrenzt wird. Auch für die ersten Abdeckelemente 9, 10 und das weitere zweite Abdeckelement 11 sind derartige Haltevorrichtungen vorgesehen, die jedoch auf Grund der in der Fig. 4 gewählten Perspektive nicht zu sehen sind. Die Haltevorrichtungen für die ersten Abdeckelemente 9, 10 und die zweiten Abdeckelemente 11, 12 sind derart angeordnet, dass die Öffnungswinkel α der ersten Abdeckelemente 9,10 und ß der zweiten Abdeckelemente 11, 12 im bevorzugten Bereich zwischen 91° und 100° liegen.

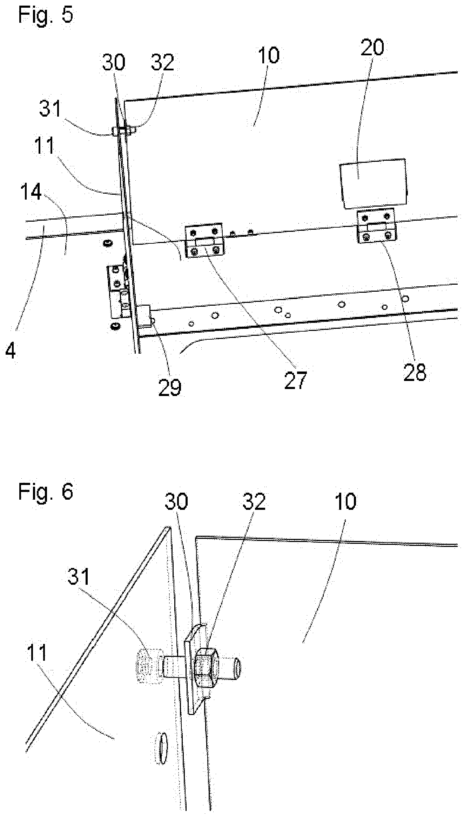

Fig. 5 zeigt eine Nahansicht eines Übergangs von einem ersten Abdeckelement 10 zu einem zweiten Abdeckelement 11. An der Schutzverkleidung 14 ist eine Haltevorrichtung 29 angebracht, die den radialen Bewegungsweg des ersten Abdeckelements 10 in Richtung des Werkzeugbereichs begrenzt. Die Haltevorrichtung 29 ist derart positioniert, dass das erste Abdeckelement 10, wenn es in geschlossenem Zustand der Schutzeinrichtung 1 auf der Haltevorrichtung 29 aufliegt, rechtwinklig zu der dem Werkzeugbereich zugewandten Innenseite des seitlichen Rahmenelements 4 liegt. Das erste Abdeckelement 10 weist an seinem dem zweiten Abdeckelement 11 benachbarten horizontalen Ende eine in Form einer Öse ausgebildete Arretiervorrichtung 30 auf. Über die Arretiervorrichtung 30 können das erste Abdeckelement 10 und das zweite Abdeckelement 11 mittels einer einfachen Schraube-Mutter Verbindung aneinander arretiert werden.

Fig. 6 ist eine weitere Nahansicht des Übergangs aus Fig. 5. Es ist zu erkennen, dass das erste Abdeckelement 10 und das zweite Abdeckelement 11 über die Arretiervorrichtung 30 und einer Bohrung im zweiten Abdeckelement 11 mittels einer Schraube 31 und einer Mutter 32 aneinander arretiert sind. Auf diese Weise ist gewährleistet, dass die Schutzeinrichtung 1 ein starres System bildet und während des Spritzgießprozesses von sich bewegenden Maschinenteilen der Spritzgießmaschine 2 erzeugte Erschütterungen keine negativen Einwirkungen auf die Schutzeinrichtung 1 haben.

## Patentansprüche

1. Schutzeinrichtung (1) für eine Spritzgießmaschine (2) mit seitlichen Rahmenelementen bzw. seitlichen Abdeckungen (3, 4) sowie einer festen (5) und einer beweglichen Werkzeugaufspannplatte (6), wobei die feste (5) und die bewegliche Werkzeugaufspannplatte (6) zwischen den seitlichen Rahmenelementen bzw. den seitlichen Abdeckungen (3, 4) angeordnet sind und die bewegliche Werkzeugaufspannplatte (6) entlang einer parallel zu den seitlichen Rahmenelementen bzw. seitlichen Abdeckungen (3, 4) verlaufenden Schließachse in Relation zur festen Werkzeugaufspannplatte (5) verfahrbar ist,
**dadurch gekennzeichnet, dass**
an der Oberseite der Spritzgießmaschine (2) sowohl auf einer Bedienerseite (7) als auch auf einer der Bedienerseite (7) gegenüberliegenden Bedienergegenseite (8) eine Anzahl erster Abdeckelemente (9, 10) angeordnet ist, welche parallel zur Schließachse verlaufen, wobei die Anordnung der ersten Abdeckelemente (9, 10) derart ausgestaltet ist, dass eine radiale Bewegung der ersten Abdeckelemente (9, 10) möglich ist, und dass an der Oberseite der Spritzgießmaschine (2) eine Anzahl zweiter Abdeckelemente (11, 12) angeordnet ist, welche orthogonal zur Schließachse verlaufen, wobei die Anordnung der zweiten Abdeckelemente (11, 12) derart ausgestaltet ist, dass eine radiale Bewegung der zweiten Abdeckelemente (11, 12) möglich ist.

2. Schutzeinrichtung nach Anspruch 1,
**dadurch gekennzeichnet, dass**
die ersten Abdeckelemente (9, 10) und/oder die zweiten Abdeckelemente (11, 12) mittels Verbindungselementen an den seitlichen Rahmenelementen bzw. seitlichen Abdeckungen (3, 4) befestigt sind.

3. Schutzeinrichtung nach Anspruch 1 oder 2,
**dadurch gekennzeichnet, dass**
zwischen den seitlichen Rahmenelementen bzw. seitlichen Abdeckungen (3, 4) Traversen, Streben und/oder Verkleidungen vorgesehen sind, die zur Befestigung der ersten und/oder der zweiten Abdeckelemente (9, 10, 11, 12) dienen.

4. Schutzeinrichtung nach Anspruch 3,
**dadurch gekennzeichnet, dass**
die Befestigung der ersten und/oder der zweiten Abdeckelemente (9, 10, 11, 12) an den Traversen, Streben oder Verkleidungen mittels Verbindungselementen erfolgt.

5. Schutzeinrichtung nach einem der Ansprüche 2 bis 4,
**dadurch gekennzeichnet, dass**
die Verbindungselemente derart ausgestaltet sind, dass sie eine Radialbewegung der ersten und zweiten Abdeckelemente (9, 10, 11, 12) ermöglichen.

6. Schutzeinrichtung nach einem der vorherigen Ansprüche,
**dadurch gekennzeichnet, dass**
an den seitlichen Rahmenelementen bzw. seitlichen Abdeckungen (3, 4) Haltevorrichtungen vorgesehen sind, wobei die Haltevorrichtungen derart ausgestaltet sind, dass sie Auflageflächen für die ersten und/oder die zweiten Abdeckelemente (9, 10, 11, 12) bilden.

7. Schutzeinrichtung nach einem der Ansprüche 3 bis 6,
**dadurch gekennzeichnet, dass**
an den Traversen, Streben oder Verkleidungen Haltevorrichtungen vorgesehen sind, wobei die Haltevorrichtungen derart ausgestaltet sind, dass sie Auflageflächen für die ersten und/oder die zweiten Abdeckelemente (9, 10, 11, 12) bilden.

8. Schutzeinrichtung nach einem der vorherigen Ansprüche,
**dadurch gekennzeichnet, dass**
die ersten Abdeckelemente (9, 10) und die zweiten Abdeckelemente (11, 12) aus Stahlblech gefertigt sind.

9. Schutzeinrichtung nach einem der vorherigen Ansprüche,
**dadurch gekennzeichnet, dass**
die ersten Abdeckelemente (9, 10) und/oder die zweiten Abdeckelemente (11, 12) Griffvorrichtungen aufweisen.

10. Schutzeinrichtung nach einem der vorherigen Ansprüche,
**dadurch gekennzeichnet, dass**
die ersten Abdeckelemente (9, 10) und/oder die zweiten Abdeckelemente (11, 12) Arretiervorrichtungen aufweisen.

11. Spritzgießmaschine umfassend eine Schutzeinrichtung nach einem der Ansprüche 1 bis 10.

## Claims

1. Protection device (1) for an injection moulding machine (2) with lateral frame elements or lateral covers (3, 4) and a fixed (5) and a movable tool clamping plate (6), wherein the fixed (5) and the movable tool clamping plate (6) are arranged between the lateral frame elements or the lateral covers (3, 4) and the movable tool clamping plate (6) can travel along a closing axis which runs parallel with the lateral frame elements or lateral covers (3, 4) in relation to the fixed tool clamping plate (5),
**characterised by** the fact that
a number of fust cover elements (9, 10) which run parallel with the closing axis are arranged on the top side of the injection moulding machine (2), both on one operator side (7) and on an operator side (8) opposite the operator side (7), wherein the arrangement of the first cover elements (9, 10) is configured such that a radial movement of the first cover elements (9, 10) is possible and that a number of second cover elements (11, 12) which extend orthogonally to the closing axis are arranged on the top side of the injection moulding machine (2), wherein the arrangement of the second cover elements (11, 12) is configured such that a radial movement of the second cover elements (11, 12) is possible.

2. Protection device according to claim 1,
**characterised by** the fact that
the first cover elements (9, 10) and/or the second cover elements (11, 12) are fixed to the lateral frame elements or lateral covers (3, 4) by means of connection elements.

3. Protection device according to claim 1 or 2,
**characterised by** the fact that
traverses, struts and/or panels are provided between the lateral frame elements or lateral covers (3, 4) and serve the purpose of fixing the first and/or the second cover elements (9, 10, 11, 12).

4. Protection device according to claim 3,
**characterised by** the fact that
the fixing of the first and/or the second cover elements (9, 10, 11, 12) to the traverses, struts or panels takes place by means of connection elements.

5. Protection device according to any of claims 2 to 4,
**characterised by** the fact that
the connection elements are configured such that they facilitate a radial movement of the first and second cover elements (9, 10, 11, 12).

6. Protection device according to any of the previous claims,
**characterised by** the fact that
holding devices are provided on the lateral frame elements or the lateral covers (3, 4), wherein the holding devices are configured such that they form contact surfaces for the first and/or the second cover elements (9, 10, 11, 12)

7. Protection device according to one of claims 3 to 6,
**characterised by** the fact that
holding devices axe provided on the traverses, struts or panels, wherein the holding devices form contact surfaces for the first and/or the second cover elements (9, 10, 11, 12).

8. Protection device according to any of the previous claims,
**characterised by** the fact that
the first cover elements (9, 10) and the second cover elements (11, 12) are made of steel plate.

9. Protection device according to any of the previous claims,
**characterised by** the fact that
the first cover elements (9, 10) and/or the second cover elements (11, 12) have handling devices.

10. Protection device according to any of the previous claims,
**characterised by** the fact that
the first cover elements (9, 10) and/or the second cover elements (11, 12) have locking devices.

11. Injection moulding machine comprising a protection device according to any of claims 1 to 10.

## Revendications

1. Dispositif de protection (1) pour une machine de moulage par injection (2) avec des éléments de cadre latéraux ou caches latéraux (3, 4) ainsi qu'avec un plateau de fixation d'outil fixe (5) et un plateau de fixation d'outil mobile (6), dans lequel le plateau de fixation d'outil fixe (5) et le plateau de fixation d'outil mobile (6) sont agencés entre les éléments de cadre latéraux ou caches latéraux (3, 4) et le plateau de fixation d'outil mobile (6) peut être déplacé par rapport au plateau de fixation d'outil fixe (5) le long d'un axe de fermeture s'étendant parallèlement aux éléments de cadre latéraux ou caches latéraux (3, 4),
**caractérisé en ce que**
un certain nombre de premiers éléments de couverture (9, 10) qui s'étendent parallèlement à l'axe de fermeture sont agencés sur le dessus de la machine de moulage par injection (2) aussi bien sur un côté opérateur (7) que sur un côté opposé (8) à l'opposé du côté opérateur (7), l'agencement des premiers éléments de couverture (9, 10) étant réalisé de telle sorte qu'un déplacement radial des premiers éléments de couverture (9, 10) est possible, et qu'un certain nombre de deuxièmes éléments de couverture (11, 12) qui s'étendent perpendiculairement à l'axe de fermeture sont agencés sur le dessus de la machine de moulage par injection (2), l'agencement des deuxièmes éléments de couverture (11, 12) étant réalisé de telle sorte qu'un déplacement radial des deuxièmes éléments de couverture (11, 12) est possible.

2. Dispositif de protection selon la revendication 1,
**caractérisé en ce que**
les premiers éléments de couverture (9, 10) et/ou les deuxièmes éléments de couverture (11, 12) sont fixés au moyen d'éléments de liaison aux éléments de cadre latéraux ou caches latéraux (3, 4).

3. Dispositif de protection selon la revendication 1 ou 2,
**caractérisé en ce que**
des traverses, des barres et/ou des habillages qui servent à la fixation des premiers et/ou deuxièmes éléments de couverture (9, 10, 11, 12) sont prévus entre les éléments de cadre latéraux ou caches latéraux (3, 4).

4. Dispositif de protection selon la revendication 3,
**caractérisé en ce que**
la fixation des premiers et/ou deuxièmes éléments de couverture (9, 10, 11, 12) aux traverses, barres ou habillages s'effectue au moyen d'éléments de liaison.

5. Dispositif de protection selon l'une quelconque des revendications 2 à 4,
**caractérisé en ce que**
les éléments de liaison sont réalisés de telle sorte qu'ils permettent un déplacement radial des premiers et deuxièmes éléments de couverture (9, 10, 11, 12).

6. Dispositif de protection selon l'une quelconque des revendications précédentes,
**caractérisé en ce que**
des dispositifs de maintien sont prévus au niveau des éléments de cadre latéraux ou caches latéraux (3, 4), lesquels dispositifs de maintien sont réalisés de telle sorte qu'ils forment des surfaces d'appui pour les premiers et/ou deuxièmes éléments de couverture (9, 10, 11, 12).

7. Dispositif de protection selon l'une quelconque des revendications 3 à 6,
**caractérisé en ce que**
des dispositifs de maintien sont prévus au niveau des traverses, barres ou habillages, lesquels dispositifs de maintien sont réalisés de telle sorte qu'ils forment des surfaces d'appui pour les premiers et/ou deuxièmes éléments de couverture (9, 10, 11, 12).

8. Dispositif de protection selon l'une quelconque des revendications précédentes,
**caractérisé en ce que**
les premiers éléments de couverture (9, 10) et les deuxièmes éléments de couverture (11, 12) sont fabriqués en tôle d'acier.

9. Dispositif de protection selon l'une quelconque des revendications précédentes,
**caractérisé en ce que**
les premiers éléments de couverture (9, 10) et/ou les deuxièmes éléments de couverture (11, 12) comportent des dispositifs de préhension.

10. Dispositif de protection selon l'une quelconque des revendications précédentes,
**caractérisé en ce que**
les premiers éléments de couverture (9, 10) et/ou les deuxièmes éléments de couverture (11, 12) comportent des dispositifs de blocage.

11. Machine de coulage par injection comprenant un dispositif de protection selon l'une quelconque des revendications 1 à 10.
